# EUROPÄISCHE PATENTSCHRIFT

(11) **EP 1 233 827 B1**
(45) Veröffentlichungstag und Bekanntmachung des Hinweises auf die Patenterteilung: **18.10.2006**
(21) Anmeldenummer: 01999422.7
(22) Anmeldetag: 16.11.2001
(51) Int. Cl.: B01D 71/02, B01D 63/06

(54) **VERFAHREN ZUR HERSTELLUNG EINES MEMBRANMODULS**
METHOD FOR PRODUCING A MEMBRANE MODULE
PROCEDE POUR PRODUIRE UN MODULE DE MEMBRANE

(30) Priorität: 07.12.2000 DE 10061126
(43) Veröffentlichungstag der Anmeldung: 28.08.2002
(73) Patentinhaber: Westfalia Separator AG, 59302 Oelde (DE)
(72) Erfinder: BLÄSE, Dieter, 73557 Mutlangen (DE); FEUERPEIL, Hans-Peter, 73529 Schwäbisch Gmünd (DE); OLAPINSKI, Hans, 73773 Aichwald (DE)
(74) Vertreter: Dr. Weitzel & Partner
(86) Internationale Anmeldenummer: PCT/EP2001/013273
(87) Internationale Veröffentlichungsnummer: WO 2002/045831

(56) Entgegenhaltungen:
- EP-A- 0 923 983
- DE-A- 19 846 041
- US-A- 6 077 436

## Beschreibung

Die Erfindung betrifft ein Verfahren zur Herstellung eines Membranmoduls sowie ein nach diesem Verfahren hergestelltes Membranmodul.

Membranmodule mit einer Vielzahl von Kanälen zur Anwendung in der Membranfiltration, beispielsweise der Mikrofiltration, der Ultrafiltration und der Nanofiltration sind aus einer Vielzahl von Druckschriften bekannt geworden.

Diesbezüglich wird beispielsweise auf die DE 198 46 041 oder die EP 0 270 051 verwiesen, deren Offenbarungsgehalt in die vorliegende Anmeldung vollumfänglich mitaufgenommen wird. Derartige Membranmodule umfassen eine Vielzahl von Kanälen, die parallel zueinander angeordnet sind. Die Oberflächen der einzelnen Kanäle des Membranmoduls sind mit einer Membran aus keramischem Material belegt, die als Filterschicht dient. Derartige Module dienen insbesondere dazu, aus einer Flüssigkeit oder einem Gas eine Komponente abzutrennen. Hierzu wird die Flüssigkeit oder das Gas durch die Vielzahl der Kanäle des Membranmoduls geführt. Die Keramik zwischen den einzelnen Kanälen bildet das Filtermedium. Die abzutrennenden Stoffe werden an der Keramikmembran zurückgehalten. Die durch die Membran hindurchtretende(n) Substanz(en), die auch als das Filtrat bezeichnet wird, ist frei von den abzutrennenden Komponenten. In den Kanälen verbleibt die mit Verunreinigungen angereicherte Flüssigkeit, das sogenannte Retentat, das abgezogen wird.

Zur Herstellung von Keramikmembranmodulen werden im Stand der Technik Extrusions-Formwerkzeuge mit einem Zufuhrkanal und in Längsrichtung dieses Zufuhrkanals angeordneten Formkernen, die über eine Punktaufhängung und eine Haltestruktur im Zufuhrkanal befestigt sind, eingesetzt. Die Formkerne weisen dabei beispielsweise kreisrunden Querschnitt auf, entsprechend dem Querschnitt der einzelnen Kanäle des Keramikmembran-Moduls. Der kreisrunde Kanalquerschnitt wird insbesondere in der Querstromfiltration bevorzugt, da die gleichmäßige Überströmung auf der Membranoberfläche zu besseren Filtrationsergebnissen führt.

Insbesondere bei Keramikmembran-Modulen mit einer Vielzahl von Kanälen führte die runde Lochgeometrie zu einem ungünstigen Verhältnis von freier Fläche am Eingang des Extrusionswerkzeuges zur freier Fläche an dessen Ausgang, die auch als Kompression bezeichnet wird.

EP-A-0 923 983 beschreibt ein Membranmodul, welches durch Extrusion hergestellt wird. Dieses Membranmodul weist eine Vielzahl von Kanälen auf, die unterschiedliche Querschnitte haben können. Einige der Kanäle sind auf ihrer inneren Oberfläche mit Filtrationsmembranen versehen, andere nicht. Die Filtrationsmembrane werden mit einer gleichmäßigen Dicke von 100 Mikrometern aufgebracht. Allgemein kann jede geeignete Dicke verwendet werden. Jedoch wird stets dargelegt, die Filtrationsmembrane mit einer konstanten Dicke auszuführen, so dass die Querschnittsform des ursprünglichen Strömungskanals beibehalten wird.

Bekannt sind auch Formwerkzeuge mit Formkernen, deren Querschnitt ein Vieleck beispielsweise ein Sechseck ist. Mit sechseckigen Kanälen kann zwar das Verhältnis von freier Fläche am Eingang zu freier Fläche am Ausgang verbessert werden, jedoch ergibt sich das Problem, daß sich beim Einsatz derartiger Membranmodule in der Filtration/Querstromfiltration wegen fehlender Turbulenz in den Ecken der Kanäle mit sechseckigem Querschnitt Ablagerungen absetzen. Aufgabe der Erfindung ist es, ein Verfahren zur Herstellung eines Membranmodules anzugeben, mit dem die Nachteile des Standes der Technik überwunden werden können; bei denen die Wandstärke zwischen den einzelenen Formkernen konstant ist, ein günstiges Verhältnis von freier Fläche am Eingang zu freier Fläche am Ausgang erreicht wird und Ablagerungen in den Membrankanälen während der Filtration vermieden werden.

Diese Aufgabe wird mit einem Verfahren gemäß Anspruch 1 gelöst.

Gute Resultate werden insbesondere bei hexagonalen Innenkanälen mit Schlüsselweite unter 3 oder noch besser unter 2 mm erreicht.

Die Erfindung soll nachfolgend anhand der Zeichnungen beispielhaft beschrieben werden.

Es zeigen:
- Figur 1:: Draufsicht auf einen Keramikmembranmodul-Rohling, hergestellt mit einem Formwerkzeug umfassend mehrere Kanäle mit sechseckigem Querschnitt.
- Figur 2:: Draufsicht auf ein Keramikmembranmodul, wobei die sechseckigen Innenkanäle mit beschichtet wurden.
- Figur 3:: ein Keramikmembranmodul-Rohling mit einer Vielzahl von sechseckigen Kanälen.

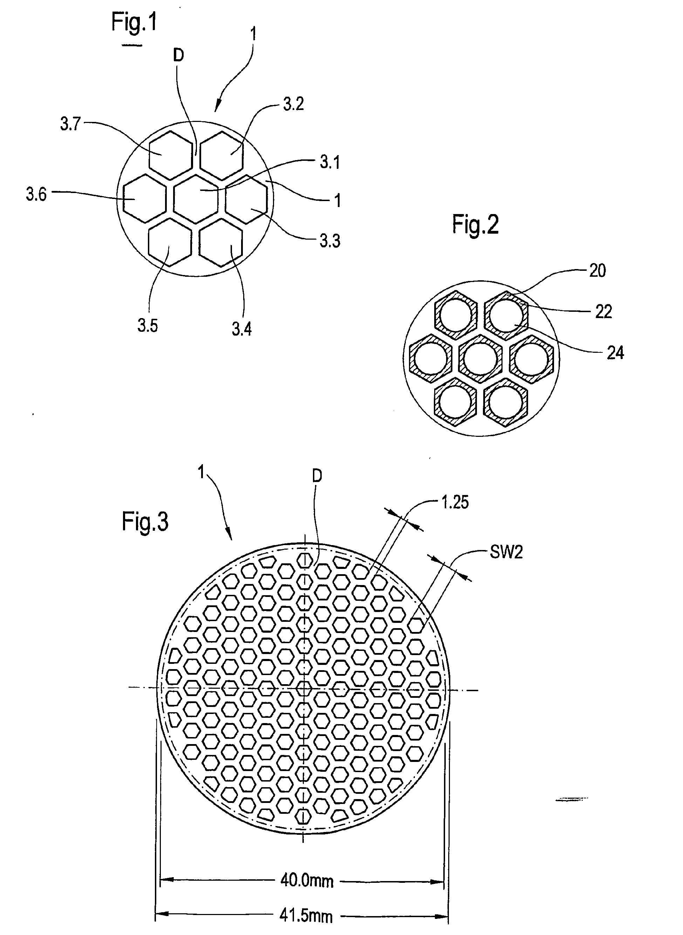

In Figur 1 ist in der Draufsicht in einer Schemazeichnung ein Keramikmembranmodul-Rohling 1 gezeigt, bei dem die einzelnen Kanäle 3.1, 3.2, 3.3, 3.4, 3.5, 3.6, 3.7 einen hexagonalen Querschnitt aufweisen. Auch andere Querschnitte von Vielecken wären denkbar. Der Keramikmembranmodul-Rohling 1 zeichnet sich durch einen stets gleichen Abstand D der einzelnen Seitenflächen benachbarter Sechsecke zueinander aus. Der Abstand D der einzelnen Kerne beträgt dabei beispielsweise 0,5 bis 1,5 mm ergebend die Wandstärken zwischen den Kanälen des daraus resultierenden Kermamikmoduls.

Der Keramikmembranmodul-Rohling wird durch Zufuhr von keramischer Masse in ein Formwerkzeug durch den Zufuhrkanal des nicht dargestellten Formwerkzeuges erhalten. Das Formwekzeug umfasst in vorliegendem Beispiel sieben Kanäle mit sechseckigem Querschnitt. Der Querschnitt des Keramikmembranmodul-Rohlings entspricht im Querschnitt den Formkernen des Formwerkzeuges. Nachteilig an einem Keramikmembranmodul mit nicht kreisförmigen Innenkanälen wäre, daß sich in den Ecken der Kanäle mit nicht kreisförmigem Querschnitt Ablagerungen niederschlagen können.

Um dies zu vermeiden, ist erfindungsgemäß vorgesehen, die Innenkanäle 20 des Keramikmembranmoduls mit hexagonalem Querschnitt wie in Figur 2 gezeigt, mit Membranschlicker derart zu beschicken, daß sich ein Kanal 24 mit annähernd kreisrundem Querschnitt ergibt.

Der Vorteil des erfindungsgemäßen Verfahrens und des erfindungsgemäßen Formwerkzeuges wirkt sich in besonderen bei der Herstellung von Keramikmodulen mit mehr als 91 Kanälen aus.

Ein Keramikmodul-Rohling mit einer Vielzahl von Kanälen mit sechseckigem Querschnitt, die sodann durch Beschickung mit Keramikmaterial Kanäle mit kreisrundem Querschnitt ergeben, ist in Figur 3 gezeigt. Der Abstand der Seitenflächen zwischen den einzelnen sechseckigen Kanälen beträgt 1,25 mm, die Schlüsselweite der einzelnen Kanäle 1,6 mm. Der Außendurchmesser des Keramikmodul-Rohlings beträgt in diesem Beispiel 41,5 mm.

Mit der Erfindung wird erstmals ein Verfahren zur Herstellung von Keramikmembran-Modulen angegeben, die sich durch eine große Anzahl von annähernd runden Innenkanälen auszeichnet und bei der die Kompressionen bei der Herstellung des Keramikmoduls ausreichend hoch gehalten werden kann.

## Patentansprüche

1. Verfahren zur Herstellung eines Membranmoduls (1) mittels eines Formwerkzeugs mit einem Zufuhrkanal für keramische Masse sowie einer Vielzahl im Zufuhrkanal in Längsrichtung angeordneten Formkernen, wobei die Formkerne den Querschnitt eines Vieleckes aufweisen, umfassend die nachfolgenden Schritte:
1.1 es wird keramische Masse durch den Zufuhrkanal des Formwerkzeuges gepresst, ergebend einen Membranmodul-Rohling (1) mit einer Vielzahl von Kanälen (3.1 - 3.7) mit sechseckigem Querschnitt; wobei
1.2 die Seitenflächen einander benachbarter Sechsecke stets einen gleichen gegenseitigen Abstand (D) aufweisen; **dadurch gekennzeichnet, dass**
1.3 nach dem Herstellen des Membranmodul-Rohlings (1) das Innere der Vielzahl von Kanälen (3.1 - 3.7) durch Aufbringen von Membran-Schlicker beschichtet wird, ergebend Innenkanäle (24) mit annähernd kreisrunder Geometrie.

2. Keramikmembran-Modul mit einer Vielzahl von Kanälen, **dadurch gekennzeichnet, daß**
das Membranmodul nach einem Verfahren gemäß Anspruch 1 hergestellt wird.

3. Keramikmembranmodul nach Ansprüche 2, **dadruch gekennzeichnet, daß** der Durchmesser der Innenkanäle kleiner als 6 mm, bervorzugt kleiner als 3 mm, ganz besonders bevorzugt kleiner 2 mm ist.

4. Keramikmembran-Modul nach Anspruch 2 oder 3, **dadurch gekennzeichnet, daß** das Membranmodul mehr als 36, bevorzugt mehr als 60, besonders bevorzugt mehr als 90 Kanäle aufweist.

5. Verwendung eines Membranmoduls gemäß einem der Ansprüche 2 bis 4, in einem der nachfolgenden Gebiete:
- Mikro-, Ultra, Nanofiltration
- Pervaporation
- dead end filtration
- Cross flow filtration mit überströmmenden Medien.
- Filtration von Trinkwasser

## Claims

1. A method for producing a membrane module (1) by means of a mold, comprising a feed channel for ceramic mass and a plurality of mold cores arranged in the feed channel in the longitudinal direction, with the mold cores having the cross section of a polygon, comprising the following steps:
1.1 ceramic mass is pressed through the feed channel of the mold, resulting in a membrane module blank (1) with a plurality of channels (3.1 to 3.7) with a hexagonal cross section, with
1,2 the side surfaces of mutually adjacent hexagons always having the same mutual distance (D);
**characterized in that**
1.3 after the production of the membrane module blank (1) the interior of the plurality of channels (3.1 to 3.7) is coated by the application of membrane slip, resulting in interior channels (24) with an approximately circular geometry.

2. A ceramic membrane module with a plurality of channels, **characterized in that** the membrane module is produced in accordance with a method according to claim 1.

3. A ceramic membrane module according to claim 2, **characterized in that** the diameter of the interior channels is smaller than 6 mm, preferably smaller than 3 mm, and especially preferably smaller than 2 mm.

4. A ceramic member module according to claim 2 or 3, **characterized in that** the membrane module comprises more than 36, preferably more than 60 and especially preferably more than 90 channels.

5. The use of a membrane module according to one of the claims 2 to 4, in one of the following fields:
- micro, ultra, nano filtration;
- pervaporation;
- dead end filtration;
- cross flow filtration with cross-flowlng media;
- filtration of drinking water.

## Revendications

1. Procédé de réalisation d'un module membranaire (1) au moyen d'un moule de formage avec un canal d'amenée de masse céramique ainsi qu'avec une pluralité de noyaux de moule disposés dans le sens de la longueur dans le canal d'amenée, les noyaux du moule ayant une section polygonale, du type comprenant les étapes suivantes :
1.1 on presse de la masse céramique au travers du canal d'amenée du moule de formage et on obtient ainsi une préforme d'un module membranalre (1) avec une pluralité de canaux (3.1 - 3.7) de section hexagonale ;
1.2 les faces latérales d'hexagones voisins ayant toujours le même écart (D) entre elles ;
**caractérisé en ce que**,
1.3 après la réalisation de la préforme du module membranaire (1), on revêt l'intérieur de la pluralité de canaux (3.1 - 3.7) de barbotine de membrane pour obtenir des canaux intérieurs (24) de géométrie approximativement circulaire.

2. Module membranalre en céramique avec une pluralité de canaux,
**caractérisé en ce que**
le module membranaire est réalisé d'après un procédé selon la revendication 1.

3. Module membranaire en céramique selon la revendication 2, **caractérisé en ce que** le diamètre des canaux intérieurs est inférieur à 6 mm, de préférence inférieur à 3 mm, une préférence toute particulière étant accordée à un diamètre inférieur à 2 mm.

4. Module membranaire en céramique selon la revendication 2 ou 3, **caractérisé en ce que** le module membranaire comporte plus de 36, de préférence plus de 60 canaux, une préférence toute particulière étant accordée à un nombre de canaux supérieur à 90.

5. Utilisation d'un module membranalre selon l'une quelconque des revendications 2 à 4 dans l'un des domaines suivants :
- la mlcro-, ultra-, nanofiltration
- la pervaporatlon
- la filtration frontale (dead end filtration)
- la filtration tangentielle (cross flow filtration) avec circulation tangentielle des fluides
- la filtration d'eau potable
